# FASCICULE DE BREVET EUROPEEN

(11) **EP 1 409 583 B1**
(45) Date de publication et mention de la délivrance du brevet: **18.03.2015**
(21) Numéro de dépôt: 02714111.8
(22) Date de dépôt: 23.01.2002
(51) Int. Cl.: C08L 27/12, C08K 5/14, C08K 5/00, H01B 3/44

(54) **COMPOSITIONS DE POLYMERES HALOGENES THERMOPLASTIQUES, PROCEDE POUR LEUR PREPARATION ET UTILISATION DE CELLES-CI**
ZUSAMMENSETZUNGEN AUS THERMOPLASTISCHEN, HALOGENIERTEN POLYMEREN, VERFAHREN ZU IHRER HERSTELLUNG UND IHRER VERWENDUNG
THERMOPLASTIC HALOGENATED POLYMER COMPOSITIONS, METHOD FOR PREPARING SAME AND USE THEREOF

(30) Priorité: 26.01.2001 FR 0101266
(43) Date de publication de la demande: 21.04.2004
(73) Titulaire: SOLVAY SA, 1120 Bruxelles (BE)
(72) Inventeur: MANFREDI, Dino, B-3530 Houthalen-Helcgteren (BE); GAUTHY, Fernand, B-1780 Wemmel (BE); MAQUET, Nestor, B-5406 Waha (BE)
(74) Mandataire: Vande Gucht, Anne
(86) Numéro de dépôt international: PCT/EP2002/000771
(87) Numéro de publication internationale: WO 2002/059190

(56) Documents cités:
- EP-A- 0 422 960
- EP-A- 0 811 641
- EP-A- 1 067 148
- EP-A1- 1 067 148
- US-A- 4 115 481
- DATABASE WPI Section Ch, Week 199048 Derwent Publications Ltd., London, GB; Class A14, AN 1990-358064 XP002178734 & JP 02 258324 A (MITSUBISHI CABLE IND LTD), 19 octobre 1990 (1990-10-19)
- DATABASE WPI Section Ch, Week 199514 Derwent Publications Ltd., London, GB; Class A14, AN 1995-101470 XP002178735 & JP 07 024897 A (SUMITOMO ELECTRIC IND CO), 27 janvier 1995 (1995-01-27)

## Description

L'invention concerne des compositions de polymères halogénés thermoplastiques, un procédé pour leur préparation, leur utilisation pour la fabrication de films, de feuilles, de plaques, de gaines expansées, de tubes, de mousses, de flacons ou de produits thermoformés et/ou moulés et l'utilisation des gaines expansées pour le gainage de câbles électriques.

Pour beaucoup d'applications potentielles des polymères halogénés thermoplastiques, en particulier des polymères fluorés thermoplastiques, il est nécessaire que ces polymères se caractérisent par un comportement de durcissement sous élongation à l'état fondu. On peut citer parmi ces applications, les gaines expansées pour le gainage de câbles électriques.

Malheureusement, la plupart des polymères halogénés thermoplastiques, en particulier les polymères fluorés thermoplastiques ne présentent pas de manière naturelle ce comportement de durcissement sous élongation à l'état fondu.

EP 1 067 148 décrit des compositions thermoplastiques, comprenant un homopolymère de CTFE et d'un copolymère de CTFE, ayant une valeur de R_{MFI} inférieur à 0.3 ou supérieur à 3, le R_{MFI} étant calculé comme le rapport du R_{MFI} de l'homopolymère à celui du mélange.

La présente invention a pour objet des compositions de polymères halogénés thermoplastiques qui ne présentent pas les inconvénients précités.

La présente invention a également pour objet un procédé de préparation de ces compositions.

L'invention a également pour objet l'utilisation de ces compositions pour la fabrication de films, de feuilles, de plaques, de gaines expansées, de tubes, de mousses, de flacons ou de produits thermoformés et/ou moulés.

L'invention a enfin pour objet l'utilisation des gaines expansées obtenues pour le gainage de câbles électriques.

A cet effet, l'invention concerne tout d'abord des compositions à base de polymères halogénés thermoplastiques caractérisées par une valeur de RMFI comprise entre 1,1 et 6, selon la revendication 1.

Par compositions de polymères halogénés thermoplastiques, on entend désigner, aux fins de la présente invention, des compositions d'un ou de plusieurs polymères halogénés thermoplastiques. De préférence, les compositions selon l'invention comprennent un seul polymère halogéné thermoplastique.

Par RMFI, on entend désigner, aux fins de la présente invention, le rapport entre deux MFI mesurés à la même température comme explicité ci-dessous, à savoir le rapport entre le MFI _{8/2} obtenu avec une filière cylindrique (hauteur 8 mm +/-0,025, diamètre 2,095 mm +/- 0,003) et le MFI _{0,3/1} obtenu avec une filière conique. La filière conique est caractérisée par un angle du cône de 60° +/- 0,5, un diamètre extérieur de 9,48 mm, un diamètre intérieur de 1,0 mm +/-0,025, une hauteur totale de 2,55 mm +/- 0,025 et une hauteur de la section cylindrique de 0,3 mm +/- 0,025.

Les deux MFI sont obtenus en mesurant selon la norme ASTM D1238, la quantité de polymère passant au travers d'une filière calibrée, dont les caractéristiques sont reprises ci-dessus, sous un poids de 10 kg et à une même température. La température de mesure est en général supérieure d'au moins 20°C à la température de fusion du polymère halogéné thermoplastique lorsque la composition comprend un polymère halogéné thermoplastique, elle est supérieure d'au moins 20°C à la température de fusion du polymère halogéné thermoplastique dont la température de fusion est la plus élevée lorsque la composition comprend plusieurs polymères halogénés thermoplastiques. Les MFI s'expriment en g/10 min.

La valeur du RMFI donne une indication du taux de branchements dans les compositions selon l'invèntiori. Une valeur de RMFI comprise entre 1,1 et 6,0 correspond généralement à un taux de branchements faible mais non nul.

Les compositions selon l'invention se caractérisent habituellement par une valeur de RMFI supérieure à 1,1, de préférence supérieure ou égale à 1,2, de manière particulièrement préférée supérieure ou égale à 1,3.

Les compositions selon l'invention se caractérisent habituellement par une valeur de RMFI inférieure à 6, de préférence inférieure ou égale à 5,5, de manière particulièrement préférée inférieure ou égale à 5.

Les compositions selon l'invention se caractérisent également habituellement par une teneur en fractions insolubles en polymères (FI) inférieure ou égale à 20 % en poids, de préférence inférieure ou égale à 15 % en poids, de manière particulièrement préférée inférieure ou égale à 10 % en poids, de manière tout particulièrement préférée inférieure ou égale à 5 % en poids.

Par teneur en fractions insolubles en polymères (FI), on entend désigner, aux fins de la présente invention, le taux de polymères insolubles dans le diméthylformamide (DMF). L'insoluble est isolé par centrifugation après avoir solubilisé l'échantillon par reflux dans du DMF.

Dans la méthode utilisée, 1 g de polymère est porté à reflux (avec agitation) pendant 30 min. dans 20 ml de DMF. L'ensemble, refroidi à température ambiante, est ensuite centrifugé à 27000 t/min. pendant 3 h. La fraction surnageante est alors filtrée dans un creuset filtrant. L'insoluble est lavé avec du DMF à température ambiante. Il est alors centrifugé une seconde fois dans les mêmes conditions et la fraction surnageante est filtrée à l'aide du même creuset filtrant. Après un nouveau rinçage à l'aide de DMF, les insolubles du godet de centrifugation et du creuset sont diffusés dans du méthanol afin d'éliminer le DMF résiduel. Avant de sécher les insolubles à poids constant à 60°C sur plaque chauffante puis sous vide (environ 10 HPa), ils sont centrifugés une dernière fois dans les mêmes conditions (27000 t/min. pendant 1 h.). La teneur minimale quantifiable par cette technique est de 1 %.

Les compositions selon l'invention présentent également de manière avantageuse un comportement de durcissement sous élongation à l'état fondu caractérisé par une augmentation exponentielle de la viscosité élongationnelle en fonction du temps.

Par viscosité élongationnelle, on entend désigner la viscosité élongationnelle telle que déterminée au moyen d'un rhéomètre, pour un gradient d'élongation de 1 s⁻¹, sur un échantillon obtenu par extrusion et soumis à une relaxation des contraintes internes avant les mesures. La température de mesure est en général supérieure d'au moins 20°C à la température de fusion du polymère halogéné thermoplastique lorsque la composition comprend un polymère halogéné thermoplastique, elle est supérieure d'au moins 20°C à la température de fusion du polymère halogéné thermoplastique dont la température de fusion est la plus élevée lorsque la composition comprend plusieurs polymères halogénés thermoplastiques.

Les compositions selon l'invention se caractérisent de plus habituellement en ce que le point d'inflexion correspondant à l'augmentation exponentielle de la viscosité élongationnelle en fonction du temps est en général inférieur à 3 secondes, de préférence inférieur à 2 secondes.

Les compositions de polymères halogénés thermoplastiques se caractérisent également généralement par une relation quasi linéaire (absence d'un plateau Newtonien) entre la viscosité dynamique et la fréquence lorsque celles-ci sont portées en graphique logarithmique.

La viscosité dynamique est habituellement mesurée entre 0,1 et 100 rad/s, au moyen d'un rhéogoniomètre à déformation imposée sur un échantillon d'un diamètre de 25 mm et d'une épaisseur de 2 mm coupé dans une plaque pressée, placé entre deux plateaux parallèles et soumis à une déformation périodique. La température de mesure est en général supérieure d'au moins 20°C à la température de fusion du polymère halogéné thermoplastique lorsque la composition comprend un polymère halogéné thermoplastique, elle est supérieure d'au moins 20°C à la température de fusion du polymère halogéné thermoplastique dont la température de fusion est la plus élevée lorsque la composition comprend plusieurs polymères halogénés thermoplastiques.

Par polymères thermoplastiques, on entend désigner aux fins de la présente invention, les polymères existant, à la température ambiante, sous leur température de transition vitreuse s'ils sont amorphes, ou entre leur température de transition vitreuse et leur température de fusion s'ils sont cristallins. Ces polymères ont la propriété de devenir mous quand ils sont chauffés, et de redevenir rigides lorsqu'ils sont refroidis sans qu'il n'y ait de changement chimique appréciable. Une telle définition peut être trouvée par exemple dans l'encyclopédie dénommée "Polymer Science Dictionary", Second Edition, Mark Alger, School of Polymer Technology, University of North London, London, UK, Chapman & Hall Edition, 1997.

Par polymères halogénés, on entend désigner aux fins de la présente invention, aussi bien les homopolymères que les copolymères et les terpolymères de monomères halogénés. Parmi ceux-ci, on peut citer notamment les homopolymères de monomères halogénés tels que le fluorure de vinylidène, le fluorure de vinyle, le trifluoréthylène, le chlorotrifluoréthylène, le chlorure de vinyle, le chlorure de vinylidène; les copolymères et terpolymères que forment ces monomères halogénés entre eux; les copolymères et terpolymères d'au moins un de ces monomères halogénés avec au moins un monomère fluoré ne contenant pas d'atome d'hydrogène tel le tétrafluoroéthylène et l'hexafluoropropylène; les copolymères et terpolymères d'au moins un de ces monomères halogénés avec au moins un autre monomère à insaturation éthylénique tel les oléfines telles que par exemple l'éthylène et le propylène; le styrène et les dérivés styréniques; les éthers vinyliques; les esters vinyliques tels que par exemple l'acétate de vinyle; les esters, nitriles et amides acryliques et les esters, nitriles et amides méthacryliques.

Les polymères halogénés thermoplastiques des compositions selon l'invention sont de préférence des polymères fluorés thermoplastiques.

Par polymères fluorés, on entend désigner aux fins de la présente invention, aussi bien les homopolymères que les copolymères et terpolymères de monomères fluorés. Parmi ceux-ci, on peut citer notamment les homopolymères du fluorure de vinylidène, du fluorure de vinyle, du trifluoréthylène ou du chlorotrifluoréthylène et les copolymères et terpolymères que forment ces monomères fluorés entre eux ou avec au moins un autre monomère fluoré ne contenant pas d'atome d'hydrogène tel le tétrafluoroéthylène et l'hexafluoropropylène, tels que par exemple les copolymères et terpolymères du fluorure de vinylidène avec au moins un autre monomère fluoré (y compris ceux ne contenant pas d'atome d'hydrogène) tel que défini ci-dessus et les copolymères et terpolymères du chlorotrifluoroéthylène avec au moins un autre monomère fluoré (y compris ceux ne contenant pas d'atome d'hydrogène) tel que défini ci-dessus. On peut citer aussi les copolymères et terpolymères d'au moins un des monomères fluorés cité ci-dessus avec au moins un autre monomère à insaturation éthylénique, tel les oléfines telles que par exemple l'éthylène et le propylène; le styrène et les dérivés styréniques; les monomères chlorés tel que par exemple le chlorure de vinyle et le chlorure de vinylidène; les éthers vinyliques; les esters vinyliques tels que par exemple l'acétate de vinyle; les esters, nitriles et amides acryliques et les esters, nitriles et amides méthacryliques.

Les polymères halogénés thermoplastiques des compositions selon l'invention sont de manière particulièrement préférée choisis parmi les polymères thermoplastiques du fluorure de vinylidène et les polymères thermoplastiques du chlorotrifluoroéthylène.

Par polymères du fluorure de vinylidène, on entend désigner aux fins de la présente invention aussi bien les homopolymères du fluorure de vinylidène, que ses copolymères et ses terpolymères avec d'autres monomères à insaturation éthylénique, qu'ils soient fluorés (fluorure de vinyle, trifluoréthylène, tétrafluoréthylène, chlorotrifluoréthylène, hexafluoropropylène) ou non (oléfines telles que par exemple l'éthylène et le propylène; styrène et dérivés styréniques, monomères chlorés tels que par exemple le chlorure de vinyle et le chlorure de vinylidène; éthers vinyliques; esters vinyliques tels que par exemple l'acétate de vinyle; esters, nitriles et amides acryliques; esters, nitriles et amides méthacryliques). Les copolymères et terpolymères contiennent de préférence au moins environ 50 % en poids d'unités monomériques dérivées du fluorure de vinylidène.

Par polymères du chlorotrifluoroéthylène, on entend désigner aux fins de la présente invention aussi bien les homopolymères du chlorotrifluoroéthylène, que ses copolymères et ses terpolymères avec d'autres monomères à insaturation éthylénique, qu'ils soient fluorés (fluorure de vinylidène, fluorure de vinyle, trifluoréthylène, tétrafluoréthylène, hexafluoropropylène) ou non (oléfines telles que par exemple l'éthylène et le propylène; styrène et dérivés styréniques, monomères chlorés tels que par exemple le chlorure de vinyle et le chlorure de vinylidène; éthers vinyliques; esters vinyliques tels que par exemple l'acétate de vinyle; esters, nitriles et amides acryliques; esters, nitriles et amides méthacryliques). Les copolymères contiennent de préférence au moins environ 50 % en poids d'unités monomériques dérivées du chlorotrifluoroéthylène.

Les polymères halogénés thermoplastiques des compositions selon l'invention sont de manière tout particulièrement préférée des polymères thermoplastiques du fluorure de vinylidène.

Les polymères halogénés thermoplastiques des compositions selon l'invention sont de manière avantageuse choisis parmi les homopolymères du fluorure de vinylidène et les copolymères et terpolymères du fluorure de vinylidène avec au moins un autre monomère fluoré.

Les compositions selon l'invention peuvent en outre comprendre un ou plusieurs additifs usuels des polymères halogénés thermoplastiques, en particulier des polymères fluorés, tels que par exemple des capteurs d'acide, des agents lubrifiants, des colorants organiques ou minéraux, des agent nucléants, des matières de charge, des agents stabilisants et des agents ignifugeants.

Les compositions selon l'invention peuvent être obtenues par n'importe quel procédé. De bons résultats sont obtenus si elles sont préparées au moyen du procédé selon l'invention.

L'invention concerne également un procédé de préparation de compositions de polymères halogénés thermoplastiques selon lequel on fait réagir en masse fondue dans une extrudeuse, un ou plusieurs polymères halogénés thermoplastiques avec un générateur de radicaux et un agent de pontage et on évacue de l'extrudeuse les compositions obtenues.

Les polymères halogénés thermoplastiques sont définis ci-dessus et sont de préférence des polymères fluorés thermoplastiques.

De manière préférée, dans le procédé selon l'invention, on fait réagir en masse fondue dans une extrudeuse, un polymère halogéné thermoplastique avec un générateur de radicaux et un agent de pontage.

Dans la suite du texte, les expressions "polymères halogénés thermoplastiques" et "polymères fluorés thermoplastiques" s'entendent, aux fins de la présente invention, au pluriel comme au singulier.

Le générateur de radicaux est en général mis en oeuvre dans le procédé selon l'invention en une quantité suffisante pour permettre la réaction entre l'agent de pontage et les polymères halogénés thermoplastiques. La quantité de générateur de radicaux est de 0,5 à 10 g/kg de polymères halogénés thermoplastiques.

La quantité de générateur de radicaux est au moins égale à 0,5, de préférence au moins égale à 0,75, de manière particulièrement préférée au moins égale à 1 g/kg de polymères halogénés thermoplastiques.

La quantité de générateur de radicaux est au maximum égale à 10, de préférence au maximum égale à 9, de manière particulièrement préférée au maximum égale à 8 g/kg de polymères halogénés thermoplastiques.

A titre de générateur de radicaux, on utilise de préférence un peroxyde organique, et plus particulièrement un alkylperoxyde. Parmi ceux-ci, on peut citer le peroxyde de t-butylcumyle, le 1,3-di(2-t-butylperoxyisopropyl)benzène, le 2,5-diméthyl-2,5-di(t-butylperoxy)hexane, le di(t-butyl)peroxyde et le 2,5-diméthyl-2,5-di(t-butylperoxy)-3-hexyne. Le 2,5-diméthyl-2,5-di-t-butylperoxy-hexane est particulièrement préféré.

L'agent de pontage est en général mis en oeuvre dans le procédé selon l'invention en une quantité suffisante pour permettre un branchement des polymères halogénés thermoplastiques. La quantité d'agent de pontage est de 0,5 à 50 g/kg de polymères halogénés thermoplastiques.

La quantité d'agent de pontage est au moins égale à 0,5, de préférence au moins égale à 2, de manière particulièrement préférée au moins égale à 2,5 g/kg de polymères halogénés thermoplastiques.

La quantité d'agent de pontage est au maximum égale à 50, de préférence au maximum égale à 40, de manière particulièrement préférée au maximum égale à 30 g/kg de polymères halogénés thermoplastiques.

Dans le procédé selon l'invention, l'agent de pontage est généralement choisi parmi les composés fonctionnels comprenant au moins deux fonctions choisies parmi les insaturations vinyliques, les insaturations allyliques et les fonctions carboxylique, amine, hydroxyle, silane ou époxyde. L'agent de pontage est de préférence choisi dans le groupe constitué par le triallylisocyanurate, le divinylbenzène, le vinyltriméthoxysilane et l'allyltriéthoxysilane. Le triallylisocyanurate est particulièrement préféré.

Le générateur de radicaux et l'agent de pontage peuvent être introduits de quelque manière que ce soit pour autant qu'ils soient introduits de manière continue dans le temps et qu'ils soient bien dispersés dans la matière en fusion. Le générateur de radicaux et l'agent de pontage peuvent être introduits par pulvérisation par exemple au moyen d'un injecteur de type spray ou d'un vaporisateur ou par injection dans la masse fondue. L'introduction du générateur de radicaux et de l'agent de pontage via un masterbatch avec les polymères halogénés thermoplastiques en poudre ou via un masterbatch avec une charge peut également être envisagée.

Selon un mode préféré de l'invention, le générateur de radicaux et l'agent de pontage sont introduits dans l'extrudeuse en mélange avec le dioxyde de carbone. Tout dispositif permettant le mélange du générateur de radicaux ou de l'agent de pontage et du dioxyde de carbone et l'introduction de ce mélange dans l'extrudeuse peut être utilisé à cette fin.

Selon un mode de réalisation particulièrement préféré, l'agent de pontage est introduit avant le générateur de radicaux.

Par réaction en masse fondue, on entend désigner aux fins de la présente invention, toute réaction en l'absence substantielle de solvant ou de diluant et à une température au moins égale à la température de fusion des polymères halogénés thermoplastiques.

Par extrudeuse, on entend désigner tout dispositif continu comprenant au moins une zone d'alimentation et, à sa sortie, une zone d'évacuation précédée d'une zone de compression, cette dernière forçant la masse fondue à passer au travers de la zone d'évacuation. La zone d'évacuation peut en outre être suivie d'un dispositif de granulation ou d'un dispositif donnant à la matière extrudée sa forme finale. Avantageusement, il sera fait appel à des extrudeuses connues basées sur le travail de deux vis, qu'elles soient co- ou contra-rotatives ou à des extrudeuses de type BUSS.

De préférence, l'extrudeuse utilisée dans le procédé selon la présente invention est aménagée de manière à ce qu'elle comprenne successivement une zone d'alimentation, une zone de fusion de la matière, une zone d'homogénéisation, une zone de réaction, facultativement une zone d'introduction d'additifs et une zone de compression-évacuation précédée d'une zone de dégazage. Chacune de ces zones a une fonction bien spécifique et se trouve à une température bien spécifique.

La zone d'alimentation a pour fonction d'assurer l'alimentation du polymère halogéné thermoplastique. Elle se trouve habituellement à une température inférieure ou égale à 50°C.

La zone de fusion de la matière a pour fonction d'assurer la mise en fusion de la matière.

La zone d'homogénéisation a pour fonction d'homogénéiser la matière en fusion.

La zone de réaction a pour fonction d'assurer la réaction.

La température dans la zone de fusion et dans la zone d'homogénéisation de la matière est habituellement supérieure ou égale à la température de fusion des polymères halogénés thermoplastiques.

La température dans la zone de réaction est habituellement supérieure ou égale à la température à laquelle le temps de demi-vie du générateur de radicaux est inférieur au temps de séjour de la matière dans cette zone.

La zone d'introduction d'additifs a pour fonction d'assurer l'introduction d'additifs lorsque ceux-ci sont ajoutés dans l'extrudeuse. La température de cette zone est généralement fonction de la viscosité de la matière et de la nature des additifs ajoutés.

La zone de compression-évacuation a pour fonction de compresser la matière et d'assurer l'évacuation de celle-ci. La température dans la zone de compression-évacuation est généralement fonction de la viscosité de la matière à évacuer.

L'agent de pontage est de préférence introduit dans l'extrudeuse avant la zone d'homogénéisation.

Le générateur de radicaux est de préférence introduit dans la zone de réaction de l'extrudeuse.

Au cours du procédé, on peut incorporer un ou plusieurs additifs usuels des polymères halogénés thermoplastiques, en particulier des polymères fluorés thermoplastiques, tels que par exemple des capteurs d'acide, des agents lubrifiants, des colorants organiques ou minéraux, des agent nucléants, des matières de charge, des agents stabilisants et des agents ignifugeants. Cet ou ces additifs peuvent être introduits dans l'extrudeuse ou bien dans les compositions une fois évacuées de l'extrudeuse.

La présente invention concerne également l'utilisation des compositions selon l'invention pour la fabrication de films, de feuilles, de plaques, de gaines expansées, de tubes, de mousses, de flacons ou de produits thermoformés et/ou moulés.

L'invention concerne également les films obtenus au départ des compositions selon l'invention.

L'invention concerne également les feuilles obtenues au départ des compositions selon l'invention.

L'invention concerne également les plaques obtenues au départ des compositions selon l'invention.

L'invention concerne également les gaines expansées obtenues au départ des compositions selon l'invention.

L'invention concerne également les tubes obtenus au départ des compositions selon l'invention.

L'invention concerne également les mousses obtenues au départ des compositions selon l'invention.

L'invention concerne également les flacons obtenus au départ des compositions selon l'invention.

L'invention concerne également les produits thermoformés et/ou moulés obtenus au départ des compositions selon l'invention.

L'invention concerne également l'utilisation des gaines expansées obtenues au départ des compositions selon l'invention pour le gainage de câbles électriques.

Les compositions de polymères halogénés thermoplastiques, en particulier de polymères fluorés thermoplastiques selon l'invention se caractérisent donc de manière avantageuse par un comportement rhéologique (viscosité élongationnelle) telles qu'elles se caractérisent par une augmentation de la résistance à la déformation lors du moussage, d'où un procédé de moussage extrêmement stable et donnant lieu à la formation de gaines expansées caractérisées par une distribution homogène de cellules fermées et régulières, une distribution étroite de la taille des cellules et par la formation d'une peau continue sans défaut de surface généré par la présence de cellules ouvertes.

Les compositions selon l'invention se caractérisent en outre par une teneur en fractions insolubles en polymères faible, donnant lieu à des produits ne présentant pas ou très peu de zones hétérogènes.

Les exemples qui suivent servent à illustrer la présente invention sans pour autant en limiter la portée.

### Polymère halogéné thermoplastique

Le polymère halogéné thermoplastique qui a été utilisé est le copolymère fluorure de vinylidène-chlorotrifluoroéthylène commercialisé par SOLVAY sous la dénomination SOLEF^{®} 31508.

### Générateur de radicaux

Le générateur de radicaux qui a été utilisé est le 2,5-diméthyl-2,5-di-t-butylperoxy-hexane (DHBP) vendu sous la marque LUPERSOL^{®} 101 par PEROXID CHEMIE.

### Agent de pontage

L'agent de pontage utilisé qui a été utilisé est le triallyl isocyanurate (TAIC), stabilisé par 100 ppm de 2,6-di-t-butyl-4-méthylphénol commercialisé par ACROS.

### Extrudeuse pour la réalisation des compositions

L'extrudeuse qui a été utilisée pour la réalisation des compositions est l'extrudeuse double-vis co-rotative CLEXTRAL modèle BC 21. Le diamètre des vis était de 25 mm. Le fourreau de 900 mm (L/D =36) à double cylindre était constitué de 9 zones indépendantes ainsi que d'une convergence et d'une filière.

Le profil de température employé était le suivant :

| | |
|---|---|
| zone d'alimentation : | 50°C |
| zone 2 : | 150°C |
| zones 3: | 190°C (zone de fusion), |
| zone 4 : | 190°C (zone d'homogénéisation), |
| zones 5 et 6 : | 190°C (zones de réaction) |
| zone 7 : | 190°C (zone de dégazage) |
| zones 8 et 9 : | 200°C (zones de compression-évacuation) |
| convergence: | 210°C |
| filière : | 210°C |

L'agent de pontage a été introduit en zone 3 et le générateur de radicaux en zone 5.

### Dispositif d'introduction du générateur de radicaux et de l'agent de pontage

Le dispositif qui a été utilisé pour l'introduction du générateur de radicaux en mélange avec le dioxyde de carbone et pour l'introduction de l'agent de pontage en mélange avec le dioxyde de carbone est décrit plus en détail ci-dessous.

Le DHBP contenu dans un réservoir a été alimenté à une chambre de mélange par l'intermédiaire d'une pompe. Le dioxyde de carbone liquide contenu dans une bonbonne a été refroidi à -10°C dans un cryothermostat avant d'être alimenté dans une chambre de mélange par l'intermédiaire d'une pompe. Le mélange du DHBP et du dioxyde de carbone liquide réalisé dans la chambre de mélange a ensuite été évacué dans l'injecteur dont la pression a été relevée au moyen d'un capteur de pression.

Le réservoir de dioxyde de carbone liquide était une bonbonne sous pression de dioxyde de carbone.

Les deux pompes étaient des pompes du type GILSON 806. La tête de la pompe prévue pour le dioxyde de carbone était équipée d'une tête 10SC et d'un thermostat kit 10SC de GILSON qui a permis de refroidir la tête à -10°C. Le liquide refroidissant était l'isopropanol refroidi dans un cryothermostat type JULABO F30.

Ce même cryothermostat a été utilisé pour refroidir le dioxyde de carbone liquide.

La chambre de mélange était un mélangeur analytique du type GILSON 811C muni d'une hélice.

L'injecteur était un injecteur permettant de travailler sous haute pression (supérieure à 74 bar).

Un capteur de pression du type GILSON 806 a été placé entre la pompe prévue pour le dioxyde de carbone et la chambre de mélange afin de relever la pression dans l'injecteur (entre 90 et 120 bar).

Le même montage a été utilisé pour l'agent de pontage.

La tête de la pompe du TAIC ainsi que les conduites ont été chauffées à 35°C pour éviter la cristallisation du réactif. L'appareil utilisé était un JULABO FP50 contenant de l'éthylène glycol. Le dioxyde de carbone a été mélangé au TAIC grâce à un mélangeur statique de type ASI STATIC MIXER adapté aux faibles débits.

L'injecteur du dispositif d'introduction a été disposé perpendiculairement au fourreau de l'extrudeuse et débouchait tangentiellement au filet de la vis d'extrusion.

### Caractérisation des compositions obtenues

Les compositions obtenues ont été caractérisées par:
- les mesures des MFI pour la détermination du RMFI,
- les mesures de rhéologie élongationnelle (RME) pour la détermination de la viscosité élongationnelle,
- les mesures de rhéologie dynamique (RDS) pour la détermination des propriétés viscoélastiques (viscosité dynamique, tan δ) en fonction de la fréquence,
- les mesures de la teneur en fractions insolubles en polymères (FI).

### Détermination du RMFI

Le RMFI a été obtenu en calculant le rapport entre deux MFI mesurés à la même température comme explicité ci-dessous, à savoir le rapport entre le MFI _{8/2} obtenu avec une filière cylindrique (hauteur 8 mm +/-0,025, diamètre 2,095 mm +/- 0,003) et le MFI _{0,3/1} obtenu avec une filière conique. La filière conique était caractérisée par un angle du cône de 60° +/- 0,5, un diamètre extérieur de 9,48 mm, un diamètre intérieur de 1,0 mm +/-0,025, une hauteur totale de 2,55 mm +/- 0,025 et une hauteur de la section cylindrique de 0,3 mm +/- 0,025.

Les deux MFI ont été obtenus en mesurant selon la norme ASTM D1238, la quantité de polymère passant au travers de chaque filière calibrée décrite ci-dessus et s'expriment en g/10 min.

L'appareil utilisé pour la mesure des MFI (Melt Indexer) était un CEAST type 6542/000. Il était constitué principalement, d'une part, d'un cylindre en acier comportant dans sa partie inférieure une filière calibrée et d'autre part, d'un piston sur lequel différentes masses sont adaptables.

Les mesures ont été effectuées pour la résine PVDF SOLEF^{®} 31508 à 230°C et la masse adoptée pour l'ensemble « piston-masse » était de 10 kg.

### Mesure de rhéologie élongationnelle (RME)

Les mesures de rhéométrie élongationnelle ont été réalisées au moyen d'un rhéomètre commercialisé par RHEOMETRICS sous la dénomination RME. Cette analyse a permis de quantifier le durcissement élongationnel du polymère à l'état fondu, en étudiant son comportement quand il est soumis à un mouvement de traction à l'état fondu. Pour cela, la résine a tout d'abord été extrudée sous forme d'une éprouvette. La déformation de l'échantillon a été enregistrée à température (230°C) et à vitesse de déformation (1 s⁻¹) fixes.

Le résultat de la mesure (diagramme RME) a été exprimé par la variation, à 230°C, de la viscosité élongationnelle à l'état fondu (exprimée en kPa.s) en fonction du temps (exprimé en s), pour un gradient d'élongation (exprimé en s⁻¹) de 1.

### Mesure de rhéologie dynamique (RDS)

Les mesures de rhéométrie dynamique ont été réalisées au moyen d'un rhéogoniomètre à déformation imposée, commercialisé par RHEOMETRICS sous la dénomination ADVANCED RHEOLOGICAL EXPANSION SYSTEM (ARES). Cette technique a permis de déterminer les propriétés viscoélastiques en cisaillement du polymère à l'état fondu.

Les propriétés viscoélastiques (module élastique G', module de perte G", tan δ (rapport G"/G') et la viscosité dynamique η) ont été réalisées dans la géométrie plan-plan sur des pastilles de 25 mm de diamètre et environ 2 mm d'épaisseur prélevées à partir de plaques pressées. Un cisaillement périodique a été appliqué par le mouvement du plateau inférieur, alors que le plateau supérieur a été équipé de transducteurs de couple et de force "normale". Les échantillons ont été analysés à une température fixe (230°C) et à une fréquence comprise entre 0,1 et 100 rad/s.

Le résultat de la mesure est exprimé par la variation, à 230°C, de la viscosité dynamique, exprimée en Pa.s, ou des modules G' et G", exprimés en Pa, en fonction de la fréquence exprimée en rad/s.

### Mesure de la teneur en fractions insolubles en polymères (FI)

La méthode consiste à déterminer la teneur en fractions insolubles du polymère dans du diméthylformamide (DMF). L'insoluble a été isolé par centrifugation après avoir solubilisé l'échantillon par reflux dans du DMF. Le mode opératoire a été décrit plus haut. La limite de quantification de la méthode est de 1 % en poids.

### Extrudeuse pour la réalisation de gaines expansées

Des gaines expansées ont été réalisées au moyen d'une extrudeuse du type NOKIA-MAILLEFER Sel 30, extrudeuse mono-vis de diamètre D=30 mm et de longueur L=25D; la filière étant telle qu'une gaine évidée soit obtenue.

Le profil de vis était constitué d'éléments de transport et il était tel qu'un taux de compression de 3 a été obtenu (15D-3D-7D).

Le profil de température employé était le suivant :
- zone d'alimentation: 10°C
- zone 1: 185°C
- zone 2: 195°C
- zone 3: 205°C
- zone 4: 215°C
- convergence: 220°C
- filière: 220°C

La vitesse de rotation de la vis était de 77 tpm. La vitesse d'étirage du jonc était de 12 mètres/minute.

### Agent gonflant

L'agent gonflant utilisé est un agent gonflant endothermique libérant du dioxyde de carbone entre 13.5 et 284°C.

### Caractérisation des gaines expansées

Les gaines expansées obtenues ont été caractérisées par :
- leur densité,
- leurs propriétés mécaniques,
- leurs propriétés diélectriques,
- microscopie de coupes microtomiques.

### Mesure de la densité des gaines expansées

La mesure de la densité des gaines expansées a été réalisée selon la méthode de la poussée d'Archimède. Après avoir été pesé dans l'air, l'échantillon de gaine expansée a été posé dans une nacelle et immergé dans de l'eau dont la température était connue. La masse de l'ensemble nacelle + échantillon a donné la poussée du liquide, ce qui a permis de déduire la densité de la matière grâce à la relation d'Archimède (après avoir soustrait la masse de la nacelle).

La pesée dans l'eau a été réalisée tout de suite après l'immersion. Enfin, avant la pesée dans l'eau, les bulles d'air accrochées aux surfaces intérieures et extérieures ont été éliminées.

### Propriétés mécaniques des gaines expansées

L'élongation à la rupture et la contrainte à la rupture des gaines expansées ont été déterminées, à température ambiante (23°C) et à 50 % d'humidité relative, selon la norme ASTM D1238. La vitesse de traction était de 50 mm/min et l'espace entre les mors de 50 mm. L'extensomètre a été réglé à 25 mm. L'appareil était un INSTRON 4301. Il était équipé de mors plats G29 et d'un extensomètre LONG TRAVEL EL1. La cellule de force était référencée ainsi 1kN fl/995.

### Propriétés diélectriques des gaines expansées

Les gaines expansées ont été recouvertes d'une feuille de cuivre adhésive sur la surface extérieure. Celle-ci a servi d'électrode extérieure. L'électrode introduite à l'intérieur de la gaine expansée était une mèche métallique.

Le pont de mesure utilisé était un pont WAYNE KERR Précision Compound Analysis 6425. A la fréquence souhaitée, il a mesuré la capacité et la tangente de l'angle de perte (tan δ). La constante diélectrique (ε) a été calculée à partir de ces deux valeurs et des dimensions de la gaine expansée. Les mesures ont été réalisées à température ambiante (27°C).

### Microscopie de coupes microtomiques des gaines expansées

Les échantillons de gaines expansées ont été posés sur un support métallique porté à - 20°C. Ensuite, des gouttes d'eau ont été déposées et ont pris en masse autour de la gaine. Ceci a permis d'obtenir des échantillons suffisamment rigides pour être découpés (dans le sens longitudinal et dans le sens transversal) en fines bandelettes de 35 µm d'épaisseur.

Les images de ces bandelettes ont été grossies jusqu`à 50 fois à l'aide d'un microscope WILD MAKROSCOP M420 couplé à une caméra TOSHIBA 3 CCD et à une imprimante HELWETT PACKARD 890C Deskjet. Ceci a permis d'obtenir une photo aux grossissements précisés ci-dessus.

### Exemples 1 à 2 (comparatif) - exemples 3 à 4 (selon l'invention)

Le polymère halogéné SOLEF^{®} 31508 a été introduit dans la zone d'alimentation de l'extrudeuse décrite ci-dessus (extrudeuse pour la réalisation des compositions) avec un débit de 8 kg/h et s'est propagé au travers des différentes zones de l'extrudeuse.

Le DHBP en mélange avec le dioxyde de carbone et le TAIC en mélange avec le dioxyde de carbone ont été pulvérisés sur le polymère halogéné au moyen du dispositif d'introduction décrit ci-dessus. Les doses de TAIC et de DHBP, exprimées en g/kg du polymère halogéné SOLEF^{®} 31508, introduites dans l'extrudeuse respectivement en zone 3 et en zone 5, pour chacun des exemples 1 à 4 sont mentionnées au tableau 1.

**Tableau 1 : doses de TAIC et de DHBP**

| | TAIC | DHBP |
|---|---|---|
| Exemple 1 (comparatif) | 0 | 0 |
| Exemple 2 (comparatif) | 0 | 3 |
| Exemple 3 | 4 | 3 |
| Exemple 4 | 5 | 2.5 |

Les valeurs du RMFI, de la teneur en fractions insolubles en polymères (FI) ainsi que les valeurs de tan δ à 0.1 rad s⁻¹, mesurées sur les compositions obtenues sont reprises au tableau 2.

**Tableau 2**

| | RMFI | FI | tan δ à 0.1 rad s⁻¹ |
|---|---|---|---|
| Exemple 1 (comparatif) | 1 | 0 | 3.27 |
| Exemple 2 (comparatif) | 1 | 0 | 2.61 |
| Exemple 3 | 4 | 3,3 | 0,73 |
| Exemple 4 | 4,7 | 4 | Non déterminé |

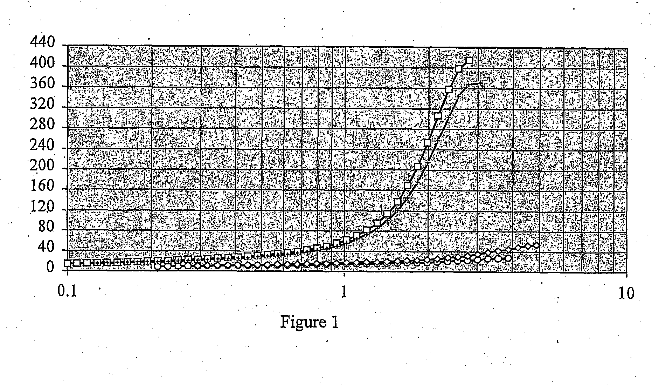

La variation de la viscosité élongationnelle (exprimée en kPa.s), à 230 °C, en fonction du temps (exprimé en s) pour un gradient d'élongation (exprimé en s⁻¹) de 1 est illustrée à la figure 1 pour les compositions selon l'exemple 1 (symbole O), selon l'exemple 2 (symbole 0), selon l'exemple 3 (symbole □) et selon l'exemple 4 (symbole +).

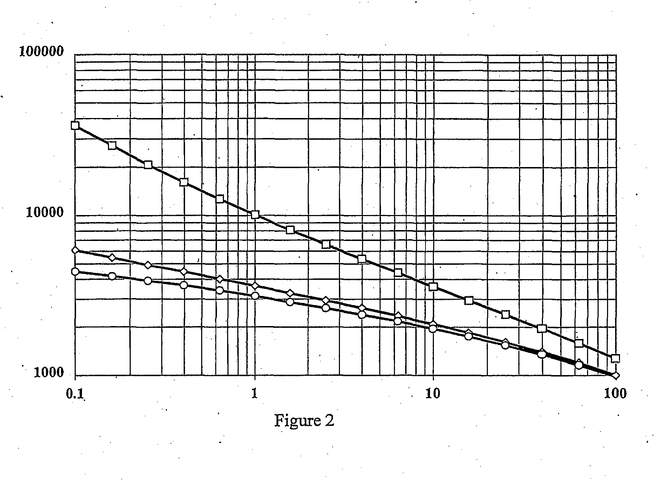

La variation de la viscosité dynamique (exprimée en kPa.s), à 230°C, en fonction du temps (exprimé en s) pour un gradient d'élongation (exprimé en s⁻¹) de 1 est illustrée à la figure 2 pour les compositions selon l'exemple 1 (symbole O), selon l'exemple 2 (symbole ◇) et selon l'exemple 3 (symbole □).

### Exemples 5 à 6 (comparatif)

Les compositions selon les exemples 1 et 2 ont ensuite été mises en oeuvre par extrusion moussage. Pour ce faire, l'agent moussant décrit ci-dessus a été incorporé aux compositions selon les exemples 1 et 2, à raison de 1,5% en poids, avant passage dans l'extrudeuse décrite ci-dessus (extrudeuse pour la réalisation de gaines expansées).

Il n'a pas été possible d'obtenir de gaines expansées par extrusion moussage des compositions selon les exemples 1 et 2.

### Exemples 7 et 8 (selon l'invention)

Les compositions selon les exemples 3 et 4 ont ensuite été mises en oeuvre par extrusion moussage. Pour ce faire, l'agent moussant décrit ci-dessus a été incorporé aux compositions selon les exemples 3 et 4, à raison de 1,5% en poids, avant passage dans l'extrudeuse décrite ci-dessus (extrudeuse pour la réalisation de gaines expansées).

Des gaines expansées, souples, évidées en leur centre, de diamètre intérieur égal à 3 mm et d'épaisseur égale à 0,5 mm de qualité ont ainsi été obtenues. Le procédé de moussage était stable.

Les valeurs de la densité, de l'élongation à la rupture, de la contrainte à la rupture, de la constante diélectrique (s) et de la tangente de l'angle de perte (tan δ) à 100 KHz, mesurées sur les gaines expansées obtenues respectivement au départ des compositions selon l'exemple 3 (exemple 7) et selon l'exemple 4 (exemple 8) sont reprises au tableau 3.

L'observation par microscopie des coupes microtomiques des gaines expansées a mis en évidence l'obtention de gaines expansées de très bonne qualité caractérisées par la présence de cellules fermées, régulières et de petite taille, taille distribuée de façon homogène; la présence de quelques cellules de grande taille seulement et l'absence de défaut à la surface.

**Tableau 3**

| | Densité, g/cm³ | Elongation à la rupture, % | Contrainte à la rupture, MPa | Constante diélectrique à 100 KHz | tan δ à 100 KHz |
|---|---|---|---|---|---|
| Exemple 7 | 1,06 | 254 | 9,6 | 4 | 0,05 |
| Exemple 8 | 1,00 | 360 | 11,1 | 3,1 | 0,046 |

De l'analyse du tableau 2, il apparaît que les compositions selon l'invention se caractérisent par une valeur de RMFI plus élevée que celles mesurées pour les compositions selon l'art antérieur et par une teneur en fractions insolubles en polymères très faible.

Les compositions selon l'invention se caractérisent par ailleurs par une valeur de tan δ plus faible que celles mesurées pour les compositions selon l'art antérieur.

De l'examen de la figure 1, il apparaît que les compositions selon l'invention se caractérisent par ailleurs par une augmentation exponentielle de la viscosité élongationnelle en fonction du temps, caractéristique d'un durcissement structural sous contrainte, contrairement aux compositions selon l'art antérieur.

De plus, le point d'inflexion correspondant à l'augmentation exponentielle de la viscosité élongationnelle en fonction du temps est inférieur à 3 secondes, contrairement aux compositions selon l'art antérieur.

De l'examen de la figure 2 (graphique logarithmique), il apparaît que les compositions selon l'invention se caractérisent par une relation quasi linéaire entre la viscosité dynamique et la fréquence. Les compositions selon l'art antérieur par contre se caractérisent par une évolution de la viscosité dynamique vers les fréquences décroissantes sous la forme d'un plateau Newtonien.

De l'examen des résultats relatifs aux gaines expansées, il apparaît que les compositions selon l'invention permettent d'obtenir des gaines expansées de très bonne qualité, de densité adéquate, résistantes à la traction et présentant de très bonnes propriétés diélectriques. Les compositions selon l'art antérieur, par contre, ne permettent pas d'obtenir des gaines expansées.

## Revendications

1. Compositions à base de polymères halogénés thermoplastiques **caractérisées par** une valeur de RMFI comprise entre 1,1 et 6, la valeur de RMFI étant le rapport entre le MFI_{8/2} et le MFI_{0,3/1} obtenus en mesurant, à la même température, selon la norme ASTM D1238, le MFI_{8/2} étant obtenu avec une filière cylindrique ayant une hauteur de 8 mm +/- 0,025, un diamètre de 2,095 mm +/- 0,003, et le MFI_{0,3/1} étant obtenu avec une filière conique, **caractérisée par** un angle du cône de 60° +/-0,5, un diamètre extérieur de 9,48 mm, un diamètre intérieur de 1,0 mm +/- 0,025, une hauteur totale de 2,55 mm +/-0,025 et une hauteur de la section cylindrique de 0,3 mm +/- 0,025.

2. Compositions de polymères selon la revendication 1, **caractérisées par** une teneur en fractions insolubles en polymères (FI) inférieure ou égale à 20 % en poids, ladite teneur en fractions insolubles étant le taux de polymères insolubles dans le diméthylformamide (DMF) isolé par centrifugation après avoir solubilisé l'échantillon par reflux dans du DMF.

3. Compositions de polymères selon la revendication 1 ou 2, **caractérisées en ce qu'**elles présentent un comportement de durcissement sous élongation à l'état fondu **caractérisé par** une augmentation exponentielle de la viscosité élongationnelle en fonction du temps.

4. Compositions de polymères selon l'une quelconque des revendications précédentes, **caractérisées en ce que** les polymères halogénés thermoplastiques sont des polymères fluorés thermoplastiques.

5. Procédé de préparation de compositions de polymères halogénés thermoplastiques selon l'une quelconque des revendications 1 à 4, **caractérisé en ce que** l'on fait réagir en masse fondue dans une extrudeuse un ou plusieurs polymères halogénés thermoplastiques avec un générateur de radicaux et un agent de pontage et **en ce que** l'on évacue de l'extrudeuse les compositions obtenues.

6. Procédé selon la revendication 5, **caractérisé en ce que** la quantité de générateur de radicaux est de 0,5 à 10 g/kg de polymères halogénés thermoplastiques.

7. Procédé selon l'une quelconque des revendications 5 à 6, **caractérisé en ce que** la quantité d'agent de pontage est de 0,5 à 50 g/kg de polymères halogénés thermoplastiques.

8. Procédé selon l'une quelconque des revendications 5 à 7, **caractérisé en ce que** l'agent de pontage est choisi dans le groupe constitué par le triallylisocyanurate, le divinylbenzène, le vinyltriméthoxysilane et l'allyltriéthoxysilane.

9. Procédé selon l'une quelconque des revendications 5 à 8, **caractérisé en ce que** l'agent de pontage est introduit avant le générateur de radicaux.

10. Utilisation des compositions selon l'une quelconque des revendications 1 à 4 ou obtenues par un procédé selon l'une quelconque des revendications 5 à 9, pour la fabrication de films, de feuilles, de plaques, de gaines expansées, de tubes, de mousses, de flacons ou de produits thermoformés et/ou moulés.

11. Utilisation des gaines expansées obtenues au départ des compositions selon l'une quelconque des revendications 1 à 4 pour le gainage de câbles électriques.

## Patentansprüche

1. Zusammensetzungen auf Basis von thermoplastischen halogenierten Polymeren, **gekennzeichnet durch** einen RMFI-Wert zwischen 1,1 und 6, wobei der RMFI-Wert das Verhältnis zwischen dem MFI_{8/2} und dem MFI_{0,3/1} ist, die durch Messung gemäß der ASTM-Norm D1238 bei der gleichen Temperatur erhalten werden, wobei der RMFI_{8/2} mit einer zylinderförmigen Düse mit einer Höhe von 8 mm +/- 0,025 und einem Durchmesser von 2,095 mm +/- 0,003 erhalten wird, und der MFI_{0,3/1} mit einer kegelförmigen Düse, die **durch** einen Kegelwinkel von 60° +/- 0,5, einen Außendurchmesser von 9,48 mm, einen Innendurchmesser von 1,0 mm +/- 0,025, eine Gesamthöhe von 2,55 mm +/-0,025 und eine Höhe des zylinderförmigen Teils von 0,3 mm +/- 0,025 gekennzeichnet ist, erhalten wird.

2. Polymerzusammensetzungen nach Anspruch 1, **gekennzeichnet durch** einen Gehalt an unlöslichen Polymeranteilen (UA) kleiner gleich 20 Gew.-%, wobei es sich bei dem Gehalt an unlöslichen Anteilen um den Gehalt an in Dimethylformamid (DMF) unlöslichen Polymeren, der **durch** Zentrifugation nach Lösen der Probe mittels Rückfluss in DMF isoliert wird, handelt.

3. Polymerzusammensetzungen nach Anspruch 1 oder 2, **dadurch gekennzeichnet, dass** sie ein Dehnverfestigungsverhalten in schmelzflüssigem Zustand aufweisen, das durch eine exponentielle Zunahme der Viskosität als Funktion der Zeit gekennzeichnet ist.

4. Polymerzusammensetzungen nach einem der vorhergehenden Ansprüche, **dadurch gekennzeichnet, dass** es sich bei den thermoplastischen halogenierten Polymeren um thermoplastische Fluorpolymere handelt.

5. Verfahren zur Herstellung von Zusammensetzungen von thermoplastischen halogenierten Polymeren nach einem der Ansprüche 1 bis 4, **dadurch gekennzeichnet, dass** man ein oder mehrere thermoplastische halogenierte Polymere in einem Extruder in der Schmelze mit einem Radikalbildner und einem Kupplungsmittel umsetzt und die erhaltenen Zusammensetzungen aus dem Extruder austrägt.

6. Verfahren nach Anspruch 5, **dadurch gekennzeichnet, dass** die Menge an Radikalbildner 0,5 bis 10 g/kg thermoplastische halogenierte Polymere beträgt.

7. Verfahren nach einem der Ansprüche 5 bis 6, **dadurch gekennzeichnet, dass** die Menge an Kupplungsmittel 0,5 bis 50 g/kg thermoplastische halogenierte Polymere beträgt.

8. Verfahren nach einem der Ansprüche 5 bis 7, **dadurch gekennzeichnet, dass** das Kupplungsmittel aus Triallylisocyanurat, Divinylbenzol, Vinyltrimethoxysilan und Allyltriethoxysilan ausgewählt wird.

9. Verfahren nach einem der Ansprüche 5 bis 8, **dadurch gekennzeichnet, dass** das Kupplungsmittel vor dem Radikalbildner eingetragen wird.

10. Verwendung der Zusammensetzungen nach einem der Ansprüche 1 bis 4 bzw. der durch ein Verfahren nach einem der Ansprüche 5 bis 9 erhaltenen Zusammensetzungen zur Herstellung von Filmen, Folien, Platten, geschäumten Mänteln, Rohren, Schaumstoffen, Flaschen oder thermogeformten und/oder abgeformten Produkten.

11. Verwendung der aus den Zusammensetzungen nach einem der Ansprüche 1 bis 4 erhaltenen geschäumten Mäntel zur Ummantelung von Elektrokabeln.

## Claims

1. Compositions based on thermoplastic halogenated polymers, the said compositions being **characterized by** an R_{MFI} value of between 1.1 and 6, the R_{MFI} value being the ratio of the MFI_{8/2} to the MFI_{0.3/1} obtained by measuring, at the same temperature, according to the ASTM D1238 standard, the MFI_{8/2} being obtained with a cylindrical die having a height of 8 ± 0.0025 mm, a diameter of 2.095 ± 0.003 mm, and the MFI_{0.3/1} being obtained with a conical die, **characterized by** a cone angle of 60° ± 0.5°, an outside diameter of 9.48 mm, an inside diameter of 1.0 ± 0.025 mm, a total height of 2.55 ± 0.025 mm and a height of the cylindrical section of 0.3 ± 0.025 mm.

2. Polymer compositions according to Claim 1, **characterized by** a content of insoluble polymer fractions (IF) of less than or equal to 20% by weight, said content of insoluble fractions being the content of polymers insoluble in dimethylformamide (DMF) isolated by centrifuging after the specimen has been dissolved by reflux in DMF.

3. Polymer compositions according to Claim 1 or 2, **characterized in that** they exhibit extensional hardening behaviour in the melt **characterized by** an exponential increase in the extensional viscosity as a function of time.

4. Polymer compositions according to any one of the preceding claims, **characterized in that** the thermoplastic halogenated polymers are thermoplastic fluoropolymers.

5. Process for preparing thermoplastic halogenated polymer compositions according to any one of Claims 1 to 4, **characterized in that** one or more thermoplastic halogenated polymers are made to react in the melt, in an extruder, with a radical initiator and a coupling agent and **in that** the compositions obtained are discharged by the extruder.

6. Process according to Claim 5, **characterized in that** the amount of radical initiator is from 0.5 to 10 g/kg of thermoplastic halogenated polymers.

7. Process according to either of Claims 5 and 6, **characterized in that** the amount of coupling agent is from 0.5 to 50 g/kg of thermoplastic halogenated polymers.

8. Process according to any one of Claims 5 to 7, **characterized in that** the coupling agent is chosen from the group formed by triallyl isocyanurate, divinylbenzene, vinyltrimethoxysilane and allyltriethoxysilane.

9. Process according to any one of Claims 5 to 8, **characterized in that** the coupling agent is introduced before the radical initiator.

10. Use of the compositions according to any one of Claims 1 to 4 or obtained by a process according to any one of Claims 5 to 9 for the manufacture of films, sheets, panels, foamed tubing, tubes, pipes, foams, bottles or products that are thermoformed and/or moulded.

11. Use of the foamed tubing obtained from the compositions according to any one of Claims 1 to 4 for the sheathing of power cables.
